# EUROPÄISCHE PATENTSCHRIFT

(11) **EP 2 020 623 B1**
(45) Veröffentlichungstag und Bekanntmachung des Hinweises auf die Patenterteilung: **02.05.2012**
(21) Anmeldenummer: 07015223.6
(22) Anmeldetag: 02.08.2007
(51) Int. Cl.: G05B 19/406, G08C 17/02, F16P 3/14, B25J 9/16

(54) **Verfahren zur Verwendung eines mobilen Bediengeräts**
Method for using a mobile operator device
Procédé d'utilisation d'un organe de commande mobile

(43) Veröffentlichungstag der Anmeldung: 04.02.2009
(73) Patentinhaber: SIEMENS AKTIENGESELLSCHAFT, 80333 München (DE)
(72) Erfinder: Griessnig, Gerhard, 8010 Graz (AT)

(56) Entgegenhaltungen:
- EP-A- 1 479 964
- EP-A- 1 672 385
- WO-A-2006/000571
- WO-A-2006/105567
- WO-A-2007/025879
- US-A1- 2001 035 729

## Beschreibung

Die Erfindung betrifft ein Verfahren zur Verwendung eines mobilen Bediengeräts, das zur Bedienung mindestens einer Maschine innerhalb eines der Maschine zugeordneten Wirkbereichs dient, siehe zum Beispiel die US-A-2001/35729.

Es ist nicht zulässig, gefahrbringende Aktionen an Maschine/ Anlagen im sicherheitsrelevanten Umfeld von jedem Ort aus durchzuführen. Die Bedienung dieser Anlagen war bisher nur an stationären Punkten oder mit kabelgebundenen Geräten möglich. Diese limitierenden Faktoren sind allerdings durch die Drahtlos-Übertragungstechniken aufgehoben. Um den Anforderungen an die Sicherheitstechnik gerecht zu werden, müssen Bereiche technisch definiert werden und es muss eine eindeutige Zuordnung zu diesen Bereichen stattfinden. Es ist bereits bekannt, entsprechende Wirkbereiche zu definieren, innerhalb derer die Bedienung einer Maschine mittels eines Bediengerätes drahtlos erfolgt. Dabei werden die Wirkbereiche von einem oder mehreren RFID-Transpondern (**R**adial **F**requency **I**dentification) begrenzt. An die Anwendung solcher Bediengeräte im Zusammenhang mit der Funktion der Wirkbereiche werden hohe Anforderungen bezüglich der Sicherheit gestellt.

Um die RFID-Transponder lesen bzw. auswerten zu können ist in der Regel Sichtkontakt zwischen dem Bediengerät und dem RFID-Transponder notwendig. In manchen Fällen, z.B. bei großen Maschinen, in die der Anwender hineinsteigt, ist es nicht möglich bzw. notwendig, den gesamten sicherheitsrelevanten Wirkbereich mit entsprechenden RFID-Transpondern abzudecken. Zum Beispiel können die sicherheitsrelevanten Wirkbereiche mit Zäunen umgrenzt werden.

Der Erfindung liegt die Aufgabe zugrunde, ein Verfahren der oben genannten Art vorzuschlagen, bei dem der Wirkbereich nur zum Teil durch RFID-Transponder abgedeckt ist und die Verfügbar des Bediengeräts aber im gesamten Wirkbereich vorhanden sein soll.

Diese Aufgabe wird durch ein Verfahren mit den Merkmalen nach Anspruch 1 gelöst. Vorteilhafte Weiterbildungen der Erfindung sind den Unteransprüchen 2 und 3 zu entnehmen.

Im Folgenden wird ein Ausführungsbeispiel des erfindungsgemäßen Verfahrens anhand einer Zeichnung näher erläutert.

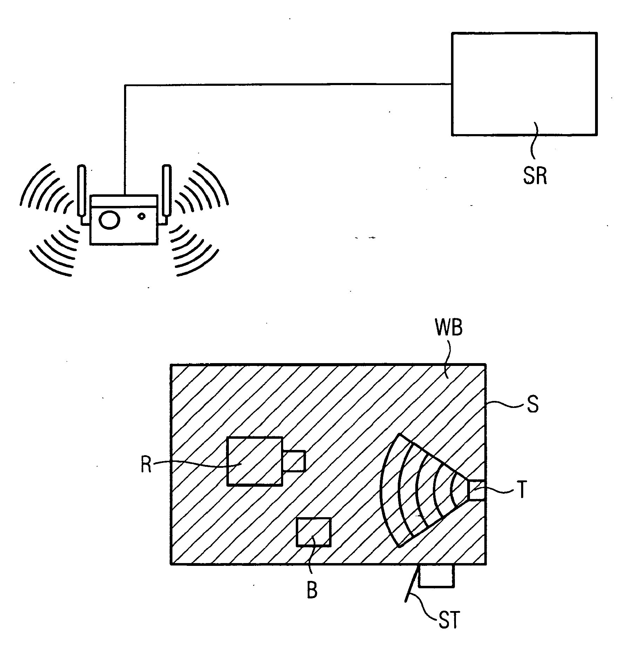

In der Figur ist ein durch einen Schutzzaun S umgrenzter Wirkbereich WB dargestellt, in dem sich Roboter oder andere Maschinen R befinden. Bei Eintritt einer Person in den Wirkbereich WB über ein Sicherheitstor ST werden z.B. die Roboter oder Maschinen R in einen für die Person weniger gefährlichen Zustand überführt, d.h. die Person schützende Schutzmaßnahmen werden wirksam. Über das Sicherheitstor ST oder andere Schutzmaßnahmen auslösende Mittel wird einer Steuerung SR der Eintritt in den Wirkbereich WB signalisiert. Hierdurch wird eine missbräuchliche oder irrtümliche Verwendung der unten beschriebenen Override-Funktion verhindert. Zur Bedienung der Roboter oder Maschinen R mittels eines Bediengeräts B meldet der Anwender das Bediengerät B nach Empfang von gültigen Transponderdaten eines RFID-Transponders T an, das den Wirkbereich WB allerdings nur zum Teil abdeckt. Hierzu empfängt das Bediengerät B Funksignale des RFID-Transponders T und ermittelt daraus die Identifikationsnummer ID und den Abstand des RFID-Transponders B und überträgt die gemessenen Daten nach ihrer Überprüfung über eine drahtlose Kommunikationsverbindung, z.B. eine WLAN-Verbindung, an die Steuerung SR. Die Steuerung SR führt von dem Bediengerät B empfangene Steuerbefehle zur Bedienung der Maschinen R in der Regel nur solange aus, wie das Bediengerät B gültige Transponderdaten, d.h. eine Identifikationsnummer ID und einen gültigen Abstandswert des RFID-Transponders T empfängt, d.h. das Bediengerät B für diesen Wirkbereich WB angemeldet ist. Für den jeweiligen RFID-Transponder T ist der maximale Abstandswert festgehalten, d.h. gültige Abstandswerte sind entsprechend kleiner als dieser maximale Abstandswert.

Im vorliegenden Ausführungsbeispiel ist aber der Wirkbereich WB nur zum Teil von einem oder mehreren RFID-Transpondern T aufgespannt. Es gibt im durch den Schutzzaun S definierten Wirkbereich WB Stellen, an den der RFID-Transponder T vom Bediengerät B nicht sichtbar ist, d.h. an denen kein Empfang gültiger Transponderdaten mehr möglich ist. Um auch hier mitdem Bediengerät B Steuerbefehle für Maschinen R in diesem Wirkbereich WB absetzen zu können, ist eine Override-Funktion vorgesehen, mit der der übliche oben genannte Modus für die Anmeldung im Wirkbereich WB aufgehoben wird. Vom Anwender des Bediengeräts B wird hierzu, z.B. durch ein Schaltsignal, der Steuerung SR signalisiert, dass die Funktion des Bediengeräts B aufrechterhalten bleiben soll, auch wenn keine gültigen Transponderdaten mehr empfangen werden. Um ein sicherheitsrelevantes Bedienen zu gewährleisten, sind andererseits Mittel, z.B. eine Lichtschranke eingesetzt, durch die die Override-Funktion bei Verlassen des Wirkbereichs WB außer Kraft gesetzt wird. Über die Lichtschranke erhält die Steuerung SR ein Signal zur Aufhebung der Override-Funktion.

## Patentansprüche

1. Verfahren zur Verwendung eines mobilen Bediengeräts (B), das zur Bedienung mindestens einer Maschine (R) innerhalb eines der Maschine zugeordneten Wirkbereichs (WB) dient, wobei der Wirkbereich (WB) nur teilweise von einem oder mehreren RFID-Transpondern (T) begrenzt wird und Schutzmaßnahmen aufweist, mit folgenden Schritten:
- Zur Bedienung der Maschinen (R) empfängt eine Steuerung (SR) einen entsprechenden Steuerbefehl über eine drahtlose Kommunikationsverbindung von dem Bediengerät (B) ;
- die Steuerung führt den Steuerbefehl des Bediengeräts (B) aus, wenn das Bediengerät (B) in dem Wirkbereich (WB) aufgrund von Transponderdaten, die das Bediengerät (B) von dem dem Wirkbereich zugeordneten RFID-Transpondern (T) empfängt, angemeldet ist, und
- wenn das Bediengerät (B) sich zwar innerhalb des Wirkbereichs (WB) befindet, aber keine gültigen Transponderdaten empfängt, führt die Steuerung (SR) den Steuerbefehl des Bediengeräts (B) auch aus, nachdem sie ein diesen Zustand kennzeichnendes Signal erhalten hat.

2. Verfahren nach Anspruch 1, **dadurch gekennzeichnet, dass** die Transponderdaten die Identifikationsnummer (ID) und einen gültigen Abstandswert des RFID-Transponders (T) beinhalten.

3. Verfahren nach Anspruch 1 oder 2, **dadurch gekennzeichnet, dass** ein Verlassen des nur teilweise durch RFID-Transponder (T) aufgespannten Wirkbereichs (WB) der Steuerung (SR) signalisiert wird.

## Claims

1. Method for using a mobile control device (B) that serves for controlling at least one machine (R) within an effective range (WB) associated with the machine, wherein the effective range (WB) is only partially delimited by one or more RFID transponders (T) and has protective measures, said method comprising the following steps:
- for the purpose of controlling the machines (R) a controller (SR) receives a corresponding control command from the control device (B) via a wireless communications link;
- the controller executes the control command of the control device (B) if the control device (B) is registered in the effective range (WB) based on transponder data that the control device (B) receives from the RFID transponders (T) assigned to the effective range, and
- if the control device (B), although located within the effective range (WB), does not receive any valid transponder data, the controller (SR) will also execute the control command of the control device (B) after it has received a signal indicating this status.

2. Method according to claim 1, **characterised in that** the transponder data includes the identification number (ID) and a valid distance value for the RFID transponder (T).

3. Method according to claim 1 or 2, **characterised in that** a departure from the effective range (WB) only partially covered by RFID transponders (T) is signalled to the controller (SR).

## Revendications

1. Procédé d'utilisation d'un appareil ( B ) de commande mobile qui sert à la commande d'au moins une machine ( R ) dans une zone ( WB ) de travail affecté à la machine, la zone ( WB ) de travail étant délimitée seulement en partie par un transpondeur RFID ( T ) ou par plusieurs transpondeurs RFID ( T ) et comportant des mesures de protection comprenant les stades suivantes :
- pour la commande des machines ( R ) un automate ( SR ) reçoit une instruction de commande correspondante, par une liaison de communication sans fil, de l'appareil ( B ) de commande,
- l'automate exécute l'instruction de commande de l'appareil ( B ) de commande, si l'appareil ( B ) de commande est annoncé dans la zone ( WB ) d'action, sur la base des données de transpondeur que l'appareil ( B ) de commande reçoit du transpondeur RFID ( T ) affecté à la zone d'action, et
- si l'appareil ( B ) de commande se trouve certes dans la zone ( WB ) d'action mais ne reçoit pas de donnée valable de transpondeur, l'automate ( SR ) exécute aussi l'instruction de commande de l'appareil ( B ) de commande après qu'il a obtenu un signal caractérisant cet état.

2. Procédé suivant la revendication 1, **caractérisé en ce que** les données de transpondeur comportent le numéro ( ID ) d'identification et une valeur de distance valable du transpondeur RFID ( T ).

3. Procédé suivant la revendication 1 ou 2, **caractérisé en ce que** le fait de quitter la zone ( WB ) d'action couverte seulement en partie par des transpondeurs RFID ( T ) est signalé à l'automate ( SR ).
